# EUROPEAN PATENT SPECIFICATION

(11) **EP 3 425 296 B1**
(45) Date of publication and mention of the grant of the patent: **17.02.2021**
(21) Application number: 17759241.7
(22) Date of filing: 01.03.2017
(51) Int. Cl.: F24F 1/00, H02J 1/00

(54) **STARTING CIRCUIT FOR STARTING AIR CONDITIONER, AND AIR CONDITIONER**
ANLAUFSCHALTUNG ZUM STARTEN EINER KLIMAANLAGE SOWIE KLIMAANLAGE
CIRCUIT DE DÉMARRAGE POUR LE DÉMARRAGE D'UN CLIMATISEUR, ET CLIMATISEUR

(30) Priority: 01.03.2016 CN 201610116154
(43) Date of publication of application: 09.01.2019
(73) Proprietor: Gree Electric Appliances, Inc. of Zhuhai, Zhuhai, Guangdong 519070 (CN)
(72) Inventor: GAO, Xiaoli, Zhuhai Guangdong 519070 (CN); TIAN, Jincheng, Zhuhai Guangdong 519070 (CN); GUO, Qingfeng, Zhuhai Guangdong 519070 (CN); QIAN, Qiang, Zhuhai Guangdong 519070 (CN)
(74) Representative: V.O.
(86) International application number: PCT/CN2017/075329
(87) International publication number: WO 2017/148390

(56) References cited:
- CN-A- 101 464 032
- CN-A- 102 721 114
- CN-A- 103 471 201
- CN-A- 104 251 530
- CN-A- 104 390 306
- CN-A- 105 135 594
- JP-A- 2007 218 453
- JP-A- 2014 202 459
- US-A1- 2011 046 791

## Description

### Technical Field

The present invention relates to the field of air conditioning control, and more particularly to a circuit for starting an air conditioner and an air conditioner.

### Background

On the current market, an inverter air conditioner supplying power to an indoor unit from an outdoor unit usually adopts a zero fire line communication mode, that is, a communication line is used as a fire line to enable the outdoor unit to be switched on during starting, and after the outdoor unit is switched on, the communication line is switched back to a communication mode. In this way, switching between strong current lines is used directly. Because the communication line cannot be completely isolated from the strong current lines, there is a certain loss to devices on the strong current lines. In addition, the communication distance between the indoor and outdoor units in this way can only be limited to about 30 meters, and it is difficult to apply to a longer-distance communication machine supplying power to an indoor unit from an outdoor unit.

For the problem in the conventional art of a great device loss on a line in a unit caused by an air conditioner starting mode, no effective solution has been proposed yet.

Patent documents CN105135594A, JP 2014202459A and US 2011/046791A1 provide respective technical solutions; however, the above mentioned problem still remains unsolved.

### Summary

the embodiments of the present invention provide a circuit for starting an air conditioner according to claim 1 and an air conditioner according to claim 9, intended to at least solve the technical problem in the conventional art of a great device loss on a line in a unit caused by an air conditioner starting mode.

According to an aspect of the embodiment of the present invention, a circuit for starting an air conditioner is provided. The circuit includes a DC power supply, a communication line, a controller, and a switch circuit. The controller generates a start triggering signal when the DC power supply supplies power to the controller through the communication line. The switch circuit switches on a power supply loop between an AC power supply and an air conditioner outdoor unit under the triggering of the start triggering signal, so as to start the air conditioner outdoor unit.

In some embodiments, the switch circuit includes a first relay. A first contact of the start triggering signal, so as to start the air conditioner outdoor unit.

In some embodiments, the switch circuit includes a first relay. A first contact of the first relay is connected to the AC power supply, and a second contact of the first relay is connected to the air conditioner outdoor unit. A first coil is connected to the controller, wherein the first coil generates electromagnetic induction under the triggering of the start triggering signal, and the first contact of the first relay and the second contact of the first relay are pulled in to switch on the power supply loop between the AC power supply and the air conditioner outdoor unit.

In some embodiments, the switch circuit includes a protection resistor, connected between the second contact of the first relay and the air conditioner outdoor unit.

In some embodiments, the switch circuit further includes a second relay. A first contact of the second relay is connected to the first contact of the first relay, and a second contact of the second relay is connected to the air conditioner outdoor unit. A second coil is connected to the controller. The controller is further configured to generate a pull-in triggering signal after the air conditioner outdoor unit is started, and the second coil generates electromagnetic induction under the triggering of the pull-in triggering signal to pull in the first contact of the second relay and the second contact of the second relay.

In some embodiments, the circuit further includes: a first switch, disposed on a line where the DC power supply supplies power to the first relay through the communication line; and a second switch, disposed on a line where the DC power supply supplies power to the controller through the communication line.

In some embodiments, the circuit further includes: a voltage conversion unit, disposed between the first switch and the controller and configured to convert the DC power supply into a power supply voltage of the controller.

In some embodiments, the circuit further includes: an outdoor unit communication unit; and an indoor unit communication unit, connected to the outdoor unit communication unit through the communication line, the communication line being further configured to transmit communication data between the air conditioner outdoor unit and an air conditioner indoor unit after the air conditioner outdoor unit is started.

In some embodiments, the AC power supply is disposed on the air conditioner outdoor unit.

In some embodiments, the circuit further includes: a third switch, connected between the DC power supply and the communication line, the DC power supply supplying power to the controller through the communication line when the third switch is in a turn-on state.

According to another aspect of the embodiment of the present invention, an air conditioner is also provided. The air conditioner includes the above-mentioned circuit for starting an air conditioner.

In the embodiments of the present invention, when a DC power supply supplies power to a controller through a communication line, the controller generates a start triggering signal, the start trigger signal is used to trigger a switch circuit, and a power supply loop between an AC power supply and an air conditioner outdoor unit is switched on to start the air conditioner outdoor unit. According to the above-mentioned embodiment, the DC power supply is weak current, and supplies power to the controller through the weak current. The controller generates a control signal and acts on the switch circuit connected to the AC power supply (i.e., strong current) to start the air conditioner outdoor unit, i.e., the strong current can be controlled by the weak current. Compared with the conventional art, switching between strong currents is avoided, thereby reducing a device loss on a strong current line, and solving the problem in the conventional art of a great device loss on a line in a unit caused by an air conditioner starting mode.

### Brief Description of the Drawings

The drawings described herein are used to provide a further understanding of the present invention, and constitute a part of the present invention. The exemplary embodiments of the present invention and descriptions thereof are used to explain the present invention and do not constitute improper limitations to the present invention. In the drawing:
Fig. 1 is a schematic diagram of a circuit for starting an air conditioner according to an embodiment of the present invention; and
Fig. 2 is a schematic diagram of an optional circuit for starting an air conditioner according to an embodiment of the present invention.

### Detailed Description of the Embodiments

In order to make those skilled in the art better understand the solutions of the present invention, the technical solutions in the embodiments of the present invention are clearly and completely described below with reference to the drawings in the embodiments of the present invention. Obviously, the described embodiments are only a part of the embodiments of the present invention, not all of the embodiments. On the basis of the embodiments of the present invention, all other embodiments obtained on the premise of no creative work of those of ordinary skill in the art fall within the scope of protection of the present invention.

It should be noted that the terms "first", "second", and the like in the specification and claims of the present invention and in the above-mentioned drawings are used to distinguish similar objects and are not necessarily used to describe a specific sequence or order. It should be understood that the data used as such may be interchanged where appropriate so that the embodiments of the present invention described herein can be implemented in other than the order illustrated or described herein. In addition, the terms "include" and "have" and any variations thereof are intended to cover non-exclusive inclusions. For example, a process, method, system, product, or device that comprises a series of steps or units need not be limited to those steps or units that are explicitly listed, and may instead include other steps or units that are not explicitly listed or inherent to these processes, methods, products or devices.

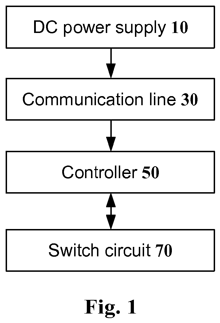

According to the embodiments of the present invention, an embodiment of a circuit for starting an air conditioner is provided. Fig. 1 is a schematic diagram of a circuit for starting an air conditioner according to an embodiment of the present invention. As shown in Fig. 1, the circuit includes a DC power supply 10, a communication line 30, a controller 50, and a switch circuit 70.

The DC power supply 10 is provided.

The communication line 30 is provided.

The controller 50 generates a start triggering signal when the DC power supply supplies power to the controller through the communication line.

The switch circuit 70 switches on a power supply loop between an AC power supply and an air conditioner outdoor unit under the triggering of the start triggering signal, so as to start the air conditioner outdoor unit.

In the embodiment of the present invention, when a DC power supply supplies power to a controller through a communication line, the controller generates a start triggering signal, the start trigger signal is used to trigger a switch circuit, and a power supply loop between an AC power supply and an air conditioner outdoor unit is switched on to start the air conditioner outdoor unit. According to the above-mentioned embodiment, the DC power supply is weak current, and supplies power to the controller through the weak current. The controller generates a control signal and acts on the switch circuit connected to the AC power supply (i.e., strong current) to start the air conditioner outdoor unit, i.e., the strong current can be controlled by the weak current. Compared with the conventional art, switching between strong currents is avoided, thereby reducing a device loss on a strong current line, and solving the problem in the conventional art of a great device loss on a line in a unit caused by an air conditioner starting mode.

The above-mentioned controller may be an outdoor unit main chip of an air conditioner.

According to the invention, after the air conditioner is connected to the AC power supply, an air conditioner indoor unit is powered on by an indoor and outdoor unit connecting line, an indoor unit main chip outputs a control signal, the DC power supply is connected to the communication line under the action of the control signal, and the DC power supply supplies power to the outdoor unit main chip through the communication line. When the DC power supply supplies power to the outdoor unit main chip through the communication line, the outdoor unit main chip outputs a start triggering signal, under the triggering of the start triggering signal, the switch circuit switches on a power supply circuit between the AC power supply and the air conditioner outdoor unit, a power supply of the air conditioner outdoor unit is established, and at this time, the air conditioner outdoor unit is started.

In the above-mentioned embodiment of the present invention, the switch circuit includes a first relay. A first contact of the first relay is connected to the AC power supply, and a second contact of the first relay is connected to the air conditioner outdoor unit. A first coil is connected to the controller, wherein the coil generates electromagnetic induction under the triggering of the start triggering signal, and the first contact of the first relay and the second contact of the first relay are pulled in to switch on the power supply loop between the AC power supply and the air conditioner outdoor unit.

The above-mentioned first relay may be a fire line relay when the air conditioner indoor unit controls the air conditioner outdoor unit to be powered on, and when the first relay is switched on, the air conditioner outdoor unit is started.

In some embodiments, when the DC power supply supplies power to the outdoor unit main chip through the communication line, the outdoor unit main chip outputs a start triggering signal, under the triggering of the start triggering signal, the coil (i.e., the above-mentioned first coil) of the first relay is powered on and generates electromagnetic induction to pull in the first contact and the second contact of the first relay, that is, the first relay switches on a power supply circuit between the AC power supply and the air conditioner outdoor unit, a power supply of the air conditioner outdoor unit is established, and at this time, the air conditioner outdoor unit is started.

In the above-mentioned embodiment, the weak DC power supply supplies power to the outdoor unit main chip through the communication line, so that the outdoor unit main chip outputs a control signal to control the first relay to be switched on, so as to switch on the power supply loop between the strong AC power supply and the air conditioner outdoor unit. That is, the strong current can be controlled by the weak current, thereby achieving the aim of starting the air conditioner outdoor unit.

In the above-mentioned embodiment of the present invention, the switch circuit includes a protection resistor, connected between the second contact of the first relay and the air conditioner outdoor unit.

In some embodiments, the switch circuit further includes a second relay. A first contact of the second relay is connected to the first contact of the first relay, and a second contact of the second relay is connected to the air conditioner outdoor unit. A second coil is connected to the controller. The controller is further configured to generate a pull-in triggering signal after the air conditioner outdoor unit is started, and the second coil generates electromagnetic induction under the triggering of the pull-in triggering signal to pull in the first contact of the second relay and the second contact of the second relay.

The above-mentioned protection resistor may be a Positive Temperature Coefficient (PTC) resistor, as a protection device for buffering an impact current during the starting of the air conditioner outdoor unit. The above-mentioned second relay may be an outdoor unit fire line relay, and the second relay is configured to cut off the PTC resistor, so that the outdoor unit enters a working state.

In some embodiments, when the first relay switches on the power supply loop between the AC power supply and the air conditioner outdoor unit, after the air conditioner outdoor unit is started, the outdoor unit main chip outputs a pull-in triggering signal, under the triggering of the pull-in triggering signal, the coil (i.e., the above-mentioned second coil) of the second relay generates electromagnetic induction to pull in the first contact and the second contact of the second relay, that is, the protection resistor is cut off through the second relay, and at this time, the air conditioner outdoor unit enters the working state.

According to the above-mentioned embodiment, when the air conditioner outdoor unit is started, the protection resistor buffers the impact current during starting, so as to avoid the loss to a device in a line caused by the impact current during starting, and after the air conditioner outdoor unit is started, the protection resistor is cut off by the second relay, so that the DC power supply is directly connected to the air conditioner outdoor unit, and the power loss on the line is reduced.

In the above-mentioned embodiment of the present invention, the circuit further includes: a first switch, disposed on a line where the DC power supply supplies power to the first relay through the communication line; and a second switch, disposed on a line where the DC power supply supplies power to the controller through the communication line.

The above-mentioned first switch and second switch may be normally-closed switches, respectively. In the process of starting the air conditioner, the first switch and the second switch are in a turn-on state; after the air conditioner outdoor unit is started, before the air conditioner indoor unit and the air conditioner outdoor unit communicate, two control signals of the first switch and the second switch are output through the outdoor unit main chip, and under the action of the two control signals, the first switch and the second switch are disconnected.

In some embodiments, when the first switch and the second switch are in the turn-on state, the first switch and the second switch supply a power supply voltage to the controller; the first switch supplies DC power to the coil of the first relay, the coil of the first relay is powered on under the triggering of the start triggering signal output by the outdoor unit main chip, and electromagnetic induction is generated to pull in the first contact and the second contact of the first relay; and the first switch supplies DC power to the coil of the second relay, the coil of the second relay is powered on under the triggering of the pull-in triggering signal output by the outdoor unit main chip after the air conditioner outdoor unit is started, and electromagnetic induction is generated to pull in the first contact and the second contact of the second relay.

In the above-mentioned embodiment, when the first switch and the second switch are turned on, power is supplied to the controller through the communication line, so that the strong current can be controlled by the weak current, and the air conditioner outdoor unit is started. When the first switch and the second switch are turned off, the air conditioner indoor unit and the air conditioner outdoor unit communicates through the communication line, so that the weak current and the strong current can be isolated, and the device loss on a line in a unit is reduced.

In the above-mentioned embodiment of the present invention, the circuit further includes: a voltage conversion unit, disposed between the first switch and the controller and configured to convert the DC power supply into a power supply voltage of the controller.

The above-mentioned voltage conversion unit may be a 7805 chip, that is, the 7805 chip may convert an input DC voltage to an output voltage of 5V.

According to the above-mentioned embodiment, the voltage conversion unit may be used to convert the DC power to the 5V power supply voltage of the controller, and it is not necessary to add the DC power supply to the air conditioner outdoor unit, so as to avoid the combination of the strong current and the weak current.

In the above-mentioned embodiment of the present invention, the circuit further includes: an outdoor unit communication unit; and an indoor unit communication unit, connected to the outdoor unit communication unit through the communication line, the communication line being further configured to transmit communication data between the air conditioner outdoor unit and an air conditioner indoor unit after the air conditioner outdoor unit is started.

The above-mentioned outdoor unit communication unit and indoor unit communication unit may be two 485 communication units, the 485 communication unit including two communication lines namely a communication line A and a communication line B.

In some embodiments, the communication line A is taken as an example to explain the functions of the communication line in detail. When the air conditioner outdoor unit is started, the DC power supply supplies power to the outdoor unit main chip through the communication line A, and the outdoor unit main chip outputs a start triggering signal to control the starting of the air conditioner outdoor unit, that is, the strong current can be controlled by the weak current through the communication line A. After the air conditioner outdoor unit is started, communication between the air conditioner indoor unit and the air conditioner outdoor unit is realized through the communication line A, that is, communication data between the air conditioner indoor unit and the air conditioner outdoor unit is transmitted through the communication line.

It should be noted that the above-mentioned functions performed through the communication line A may also be completed through the communication line B.

In the above-mentioned embodiment, regardless of a scenario where power is supplied to the outdoor unit main chip through the communication line or a scenario where the communication between the air conditioner indoor unit and the air conditioner outdoor unit is realized through the communication line, the communication line is connected with the weak current. Compared with a solution in which the communication line is used as a fire line to switch on the outdoor unit during starting in the conventional art, the weak current and the strong current can be separated, and the device loss on a line in a unit can be reduced.

In the above-mentioned embodiment of the present invention, the AC power supply is disposed on the air conditioner outdoor unit.

In some embodiments, the AC power supply is disposed on the air conditioner outdoor unit. After the air conditioner is connected to the AC power supply, the air conditioner indoor unit is powered on through the indoor and outdoor unit connecting line, and the air conditioner outdoor unit realizes establishment of a power supply of the air conditioner outdoor unit when the first relay is switched on.

In some embodiments, when the air conditioner enters a standby state, the first relay and the second relay may be disconnected to completely disconnect the air conditioner outdoor unit from the AC power supply, so that the power consumption of the air conditioner outdoor unit may be reduced to zero.

According to the above-mentioned embodiment, the power supply mode of supplying power to the air conditioner indoor unit from the air conditioner outdoor unit is limited.

In the above-mentioned embodiment of the present invention, the circuit further includes: a third switch, connected between the DC power supply and the communication line, the DC power supply supplying power to the controller through the communication line when the third switch is in a closed state.

The above-mentioned third switch may be a relay for the air conditioner indoor unit to control the DC power supply. When the third switch is in a turn-on state, the DC power supply supplies power to the main chip of the outdoor unit through the communication line. When the third switch is in a turn-off state and both the first switch and the second switch are in a turn-off state, communication data between the air conditioner indoor unit and the air conditioner outdoor unit is transmitted through the communication line.

In some embodiments, in order to ensure that the air conditioner outdoor unit can be normally started, after the air conditioner indoor unit is powered on through the indoor and outdoor unit connecting line, the indoor unit main chip outputs a control signal to control the third switch to continuously turn on for a fixed number of times, and the reference value may be 3 times. Each turn-on is continued for a fixed period of time, and the reference value may be 1s. If the third switch fails to start the air conditioner outdoor unit after a fixed number of consecutive times, the starting failure is reported, and a user may find the line device problem according to the reported information.

In the above-mentioned embodiment, by controlling the state of the third switch, it is possible to realize the accurate switching of the communication function and the power supply function of the communication line.

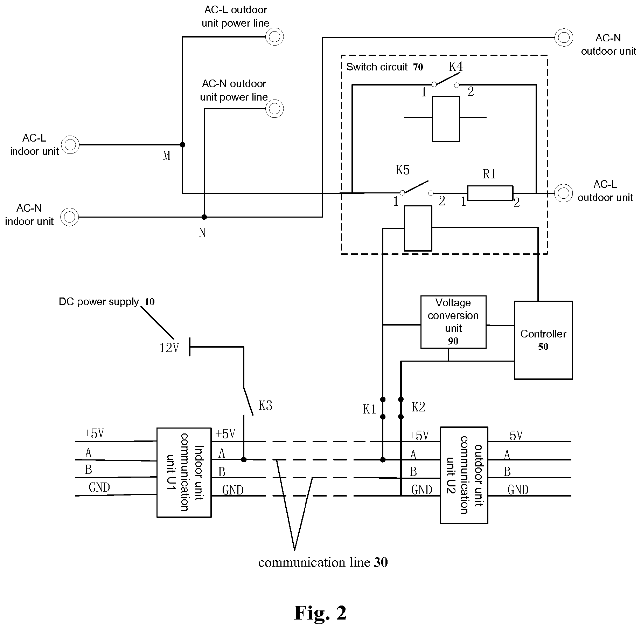

The above-mentioned embodiment of the present invention will be described in detail with reference to Fig. 2. As shown in Fig. 2, the circuit of the present embodiment includes: a DC power supply 10 (12V), a communication line 30 (including a communication line A or a communication line B), a controller 50, a switch circuit 70 (including a first relay K5, a second relay K4 and a protection resistor R1), a first switch K1, a second switch K2, a third switch K3, a voltage conversion unit 90, an indoor unit communication unit U1, an outdoor unit communication unit U2, an AC-L outdoor unit (i.e., fire line interface of air conditioner outdoor unit), an AC-N outdoor unit (i.e., zero line interface of air conditioner outdoor unit), an AC-L indoor unit (i.e., fire line interface of air conditioner indoor unit), an AC-N indoor unit (i.e., zero line interface of air conditioner indoor unit), an AC-L outdoor unit power line (i.e., AC fire line), and an AC-N outdoor unit power line (i.e., AC zero line)

The communication line A is taken as an example to describe the process of starting an air conditioner outdoor unit in detail. As shown in Fig. 2, the communication line A and the communication line B are connected between the indoor unit communication unit U1 and the outdoor unit communication unit U2. The DC power supply 10 is connected to the communication line A through the third switch K3. One end of the first switch K1 is connected to the communication line A. A coil of the first relay K5 is disposed between the first switch K1 and the controller 50, and the voltage conversion unit 90 is also disposed between the first switch K1 and the controller 50. The second switch K2 is disposed between the controller 50 and a GND port of the outdoor unit communication unit U2. The first relay K5 and the protection resistor R1 are connected in series between the AC-L outdoor unit power line and the AC-L outdoor unit. A contact 1 of the second relay K4 (i.e., the first contact of the second relay K4) is connected to a contact 1 of the first relay K5 (i.e., the first contact of the first relay K5). A contact 2 is connected to the second end of the protection resistor R1. The AC-L outdoor unit power line and the AC-L indoor unit are connected to a point M. The AC-N outdoor unit power line, the AC-N indoor unit and the AC-N outdoor unit are connected to a point N.

The power supply voltage of the above-mentioned indoor unit communication unit U1 and the power supply voltage of the above-mentioned outdoor unit communication unit U2 are 5V, and GND is used to indicate grounding.

The above-mentioned controller may be an outdoor unit main chip. The outdoor unit communication unit and the indoor unit communication unit may be 485 communication modules. The above-mentioned voltage conversion unit may be a 7805 chip.

In some embodiments, after the air conditioner is connected to the AC power supply, the air conditioner indoor unit is powered on through an indoor and outdoor unit connecting line, the indoor unit main chip controls the third switch K3 to cut the 12V DC power supply to the communication line A between the outdoor unit communication unit U2 and the indoor unit communication unit U1. The 12V DC power supply supplies power to the first coil of the first relay K5 and the second coil of the second relay K4 through the communication line A, and simultaneously converts 12V to 5V to be supplied to the outdoor unit main chip through the 7805 chip.

In some embodiments, the outdoor unit main chip is powered on, outputs a control signal of the first relay K5, controls the conduction of the first relay K5, and connects the air conditioner outdoor unit and the AC power supply, that is, switches on the fire line of the air conditioner outdoor unit. Meanwhile, the protection resistor R1 (i.e., PCT resistor) plays a role in buffering an impact current during power-on to protect the power supply circuit of the air conditioner outdoor unit. At this time, the power supply of the air conditioner outdoor unit is established, and the air conditioner outdoor unit is started. After the air conditioner outdoor unit is started, a program in the outdoor unit main chip sets to output a control signal of the second relay K4 after 3 seconds, controls the conduction of the second relay K4, and cuts off the protection resistor R1, and the outdoor unit enters a working state. After the outdoor unit enters the working state, and before the air conditioner outdoor unit and the air conditioner indoor unit are ready to communicate, the outdoor unit main chip outputs control signals of the first switch K1 and the second switch K2 to cut off the first switch K1 and the second switch K2. Meanwhile, the indoor unit main chip outputs a control signal of the third switch K3 to cut off the third switch K3. When the first switch, the second switch and the third switch are all turned off, the indoor unit communication module and the outdoor unit communication module begin to normally communicate.

It should be noted that if the air conditioner outdoor unit is powered off, the first switch K1 and the second switch K2 need to be controlled to be normally closed.

It should be further noted that the functions that can be implemented by the communication line A in the above-mentioned embodiment may also be achieved through the communication line B. That is, when the first switch and the third switch are connected to the communication line B, the circuit may also start the air conditioner.

According to the embodiment of the present invention, for an air conditioner adopting a power supply mode in which an indoor unit supplies power to an outdoor unit, the air conditioner indoor and outdoor units use a communication mode of a 485 communication module, and when the air conditioner is started, a fire line relay (the above-mentioned first relay) is controlled by means of a communication line in the 485 communication module to start the air conditioner outdoor unit, so as to awaken the air conditioner outdoor unit. The communication line is connected to a weak DC power supply, and the air conditioner outdoor unit is connected to a strong AC power supply, so that strong current can be controlled by weak current, switching between strong currents is avoided, and the device loss on a strong current line is reduced. In addition, in this solution, the AC power supply is disposed on the air conditioner outdoor unit, and the fire line relay (the above-mentioned first relay) is controlled by means of the communication line in the 485 communication module to start the air conditioner outdoor unit. Therefore, the air conditioner indoor unit and the air conditioner outdoor unit may be placed at a longer distance (such as more than 30 meters) to achieve a function of starting the air conditioner outdoor unit within a long distance.

According to the embodiment of the present invention, an embodiment of an air conditioner is provided. The air conditioner includes the circuit for starting an air conditioner in the above-mentioned embodiment.

In the embodiment of the present invention, when a DC power supply supplies power to a controller through a communication line, the controller generates a start triggering signal, the start trigger signal is used to trigger a switch circuit, and a power supply loop between an AC power supply and an air conditioner outdoor unit is switched on to start the air conditioner outdoor unit. According to the above-mentioned embodiment, the DC power supply is weak current, and supplies power to the controller through the weak current. The controller generates a control signal and acts on the switch circuit connected to the AC power supply (i.e., strong current) to start the air conditioner outdoor unit, i.e., the strong current can be controlled by the weak current. Compared with the conventional art, switching between strong currents is avoided, thereby reducing a device loss on a strong current line, and solving the problem in the conventional art of a great device loss on a line in a unit caused by an air conditioner starting mode.

The above-mentioned controller may be an outdoor unit main chip of an air conditioner.

In some embodiments, after the air conditioner is connected to the AC power supply, an air conditioner indoor unit is powered on by an indoor and outdoor unit connecting line, an indoor unit main chip outputs a control signal, the DC power supply is connected to the communication line under the action of the control signal, and the DC power supply supplies power to the outdoor unit main chip through the communication line. When the DC power supply supplies power to the outdoor unit main chip through the communication line, the outdoor unit main chip outputs a start triggering signal, under the triggering of the start triggering signal, the switch circuit switches on a power supply circuit between the AC power supply and the air conditioner outdoor unit, a power supply of the air conditioner outdoor unit is established, and at this time, the air conditioner outdoor unit is started.

In the above-mentioned embodiment of the present invention, the switch circuit includes a first relay. A first contact of the first relay is connected to the AC power supply, and a second contact of the first relay is connected to the air conditioner outdoor unit. A first coil is connected to the controller, wherein the coil generates electromagnetic induction under the triggering of the start triggering signal, and the first contact of the first relay and the second contact of the first relay are pulled in to switch on the power supply loop between the AC power supply and the air conditioner outdoor unit.

The above-mentioned first relay may be a fire line relay when the air conditioner indoor unit controls the air conditioner outdoor unit to be powered on, and when the first relay is switched on, the air conditioner outdoor unit is started.

In some embodiments, when the DC power supply supplies power to the outdoor unit main chip through the communication line, the outdoor unit main chip outputs a start triggering signal, under the triggering of the start triggering signal, the coil (i.e., the above-mentioned first coil) of the first relay is powered on and generates electromagnetic induction to pull in the first contact and the second contact of the first relay, that is, the first relay switches on a power supply circuit between the AC power supply and the air conditioner outdoor unit, a power supply of the air conditioner outdoor unit is established, and at this time, the air conditioner outdoor unit is started.

In the above-mentioned embodiment, the weak DC power supply supplies power to the outdoor unit main chip through the communication line, so that the outdoor unit main chip outputs a control signal to control the first relay to be switched on, so as to switch on the power supply loop between the strong AC power supply and the air conditioner outdoor unit. That is, the strong current can be controlled by the weak current, thereby achieving the aim of starting the air conditioner outdoor unit.

In the above-mentioned embodiment of the present invention, the switch circuit includes a protection resistor, connected between the second contact of the first relay and the air conditioner outdoor unit.

In some embodiments, the switch circuit further includes a second relay. A first contact of the second relay is connected to the first contact of the first relay, and a second contact of the second relay is connected to the air conditioner outdoor unit. A second coil is connected to the controller. The controller is further configured to generate a pull-in triggering signal after the air conditioner outdoor unit is started, and the second coil generates electromagnetic induction under the triggering of the pull-in triggering signal to pull in the first contact of the second relay and the second contact of the second relay.

The above-mentioned protection resistor may be a PTC resistor, as a protection device for buffering an impact current during the starting of the air conditioner outdoor unit. The above-mentioned second relay may be an outdoor unit fire line relay, and the second relay is configured to cut off the PTC resistor, so that the outdoor unit enters a working state.

In some embodiments, when the first relay switches on the power supply loop between the AC power supply and the air conditioner outdoor unit, after the air conditioner outdoor unit is started, the outdoor unit main chip outputs a pull-in triggering signal, under the triggering of the pull-in triggering signal, the coil (i.e., the above-mentioned second coil) of the second relay generates electromagnetic induction to pull in the first contact and the second contact of the second relay, that is, the protection resistor is cut off through the second relay, and at this time, the air conditioner outdoor unit enters the working state.

According to the above-mentioned embodiment, when the air conditioner outdoor unit is started, the protection resistor buffers the impact current during starting, so as to avoid the loss to a device in a line caused by the impact current during starting, and after the air conditioner outdoor unit is started, the protection resistor is cut off by the second relay, so that the DC power supply is directly connected to the air conditioner outdoor unit, and the power loss on the line is reduced.

The sequence numbers of the above-mentioned embodiments of the present invention are only for description, and do not represent the pros and cons of the embodiments.

In the above-mentioned embodiments of the present invention, descriptions for each embodiment are emphasized respectively, and parts which are not elaborated in a certain embodiment may refer to relevant descriptions for other embodiments.

In some embodiments provided by the present invention, it should be understood that the disclosed technical content may be implemented in another manner. For example, the device embodiment described above is only schematic. For example, division of the units is only logic function division, and other division manners may be adopted during practical implementation. For example, multiple units or components may be combined or integrated into another system, or some characteristics may be neglected or not executed. In addition, coupling or direct coupling or communication connection between displayed or discussed components may be indirect coupling or communication connection, implemented through some interfaces, of the units or modules, and may be electrical and mechanical or adopt other forms.

The above-mentioned units described as separate parts may or may not be physically separated, and parts displayed as units may or may not be physical units, and namely may be located in the same place, or may also be distributed to multiple network units. Part or all of the units may be selected to achieve the purpose of the solutions of the present embodiment according to a practical requirement.

In addition, each function unit in each embodiment of the present invention may be integrated into a processing unit, each unit may also exist independently, and two or more than two units may also be integrated into a unit. The above-mentioned integrated unit may be implemented in a form of hardware, and may also be implemented in a form of software function unit.

When being implemented in a form of software function unit and sold or used as an independent product, the integrated unit may also be stored in a computer-readable storage medium. Based on such an understanding, the technical solutions of the present invention substantially or parts making contributions to the conventional art may be embodied in a form of software product, and the computer software product is stored in a storage medium, including a plurality of instructions configured to enable a computer device (which may be a personal computer, a server, a network device or the like) to execute all or part of the method in each embodiment of the present invention. The foregoing storage medium includes: various media capable of storing program codes such as a U disk, a Read-Only Memory (ROM), a Random Access Memory (RAM), a mobile hard disk, a magnetic disk or an optical disk.

The above description is only a preferred embodiment of the present invention, and it should be pointed out that for those of ordinary skill in the art, several improvements and modifications can be made.

## Claims

1. A circuit for starting an air conditioner, comprising:
a DC power supply (10), is configured to supply a DC power to an controller (50)which is a main chip of an air conditioner outdoor unit;
a communication line (30), which is connected between the air conditioner outdoor unit and an air conditioner indoor unit;
a main chip of the air conditioner indoor unit, which is configured to outputs a control signal when the air conditioner indoor unit is powered on by an indoor and outdoor unit connecting line, and the DC power supply is connected to the communication line under an action of the control signal, and the DC power supply supplies DC power to the controller (50) through the communication line (30);
the controller (50), which is configured to generate a start triggering signal when the DC power supply supplies DC power to the controller through the communication line(30); and
a switch circuit (70), switching on, triggered by the start triggering signal, a power supply loop between an AC power supply and the air conditioner outdoor unit to start the air conditioner outdoor unit, wherein the AC power supply is disposed on the air conditioner outdoor unit.

2. The circuit as claimed in claim 1, wherein the switch circuit (70) comprises:
a first relay, a first contact of the first relay being connected to the AC power supply, a second contact of the first relay being connected to the air conditioner outdoor unit, and a first coil of the first relay being connected to the controller(50),
wherein the first coil generates electromagnetic induction under the triggering of the start triggering signal, and the first contact of the first relay and the second contact of the first relay are pulled in to switch on the power supply loop between the AC power supply and the air conditioner outdoor unit.

3. The circuit as claimed in claim 2, wherein the switch circuit (70) comprises: a protection resistor, connected between the second contact of the first relay and the air conditioner outdoor unit.

4. The circuit as claimed in claim 3, wherein the switch circuit (70) further comprises:
a second relay, a first contact of the second relay being connected to the first contact of the first relay, a second contact of the second relay being connected to the air conditioner outdoor unit, and a second coil of the second relay being connected to the controller (50),
wherein the controller (50) is further configured to generate a pull-in triggering signal after the air conditioner outdoor unit is started, and the second coil generates electromagnetic induction under the triggering of the pull-in triggering signal to pull in the first contact of the second relay and the second contact of the second relay.

5. The circuit as claimed in any one of claims 2 to 4, further comprising:
a first switch, disposed on a line where the DC power supply supplies power to the first relay through the communication line (30); and
a second switch, disposed on a line where the DC power supply supplies power to the controller (50) through the communication line (30).

6. The circuit as claimed in claim 5, further comprising:
a voltage conversion unit (90), disposed between the first switch and the controller (50) and configured to convert the DC power supply into a power supply voltage of the controller (50).

7. The circuit as claimed in claim 4 or 5, further comprising:
an outdoor unit communication unit; and
an indoor unit communication unit, connected to the outdoor unit communication unit through the communication line,
wherein the communication line is further configured to transmit communication data between the air conditioner outdoor unit and an air conditioner indoor unit after the air conditioner outdoor unit is started.

8. The circuit as claimed in claim 1, further comprising:
a third switch, connected between the DC power supply and the communication line, the DC power supply supplying power to the controller through the communication line when the third switch is in a turn-on state.

9. An air conditioner, comprising the circuit as claimed in any one of claims 1 to 8.

## Patentansprüche

1. Schaltung zum Starten einer Klimaanlage, umfassend:
eine Gleichstromversorgung (10), die so ausgelegt ist, dass sie eine Steuerung (50) mit Gleichstrom versorgt, der ein Hauptchip einer Außeneinheit der Klimaanlage ist;
eine Kommunikationsleitung (30), die zwischen der Außeneinheit der Klimaanlage und einer Inneneinheit der Klimaanlage angeschlossen ist;
einen Hauptchip der Inneneinheit der Klimaanlage, der so ausgelegt ist, dass er ein Steuersignal ausgibt, wenn die Inneneinheit der Klimaanlage durch eine Verbindungsleitung der Innen- und Außeneinheit eingeschaltet wird, und die Gleichstromversorgung an die Kommunikationsleitung unter einer Wirkung des Steuersignals angeschlossen ist, und die Gleichstromversorgung die Steuerung (50) über die Kommunikationsleitung (30) mit Gleichstrom versorgt;
die Steuerung (50), die so ausgelegt ist, dass sie ein Startauslösesignal erzeugt, wenn die Gleichstromversorgung die Steuerung über die Kommunikationsleitung (30) mit Gleichstrom versorgt; und
eine Schalterschaltung (70), die, ausgelöst durch das Startauslösesignal, eine Stromversorgungsschleife zwischen einer Wechselstromversorgung und der Außeneinheit der Klimaanlage einschaltet, um die Außeneinheit der Klimaanlage zu starten, wobei die Wechselstromversorgung an der Außeneinheit der Klimaanlage angeordnet ist.

2. Schaltung nach Anspruch 1, wobei die Schalterschaltung (70) umfasst:
ein erstes Relais, wobei ein erster Kontakt des ersten Relais an die Wechselstromversorgung angeschlossen ist, ein zweiter Kontakt des ersten Relais an die Außeneinheit der Klimaanlage angeschlossen ist und eine erste Spule des ersten Relais an die Steuerung (50) angeschlossen ist,
wobei die erste Spule unter dem Auslösen des Startauslösesignals eine elektromagnetische Induktion erzeugt und der erste Kontakt des ersten Relais und der zweite Kontakt des ersten Relais angezogen werden, um die Stromversorgungsschleife zwischen der Wechselstromversorgung und der Außeneinheit der Klimaanlage einzuschalten.

3. Schaltung nach Anspruch 2, wobei die Schalterschaltung (70) umfasst: einen Schutzwiderstand, der zwischen dem zweiten Kontakt des ersten Relais und der Außeneinheit der Klimaanlage angeschlossen ist.

4. Schaltung nach Anspruch 3, wobei die Schalterschaltung (70) ferner umfasst:
ein zweites Relais, wobei ein erster Kontakt des zweiten Relais an den ersten Kontakt des ersten Relais angeschlossen ist, ein zweiter Kontakt des zweiten Relais an die Außeneinheit der Klimaanlage angeschlossen ist, und eine zweite Spule des zweiten Relais an die Steuerung (50) angeschlossen ist,
wobei die Steuerung (50) ferner so ausgelegt ist, dass sie ein Anzugsauslösesignal erzeugt, nachdem die Außeneinheit der Klimaanlage gestartet wurde, und die zweite Spule unter dem Auslösen des Anzugsauslösesignals elektromagnetische Induktion erzeugt, um den ersten Kontakt des zweiten Relais und den zweiten Kontakt des zweiten Relais anzuziehen.

5. Schaltung nach einem der Ansprüche 2 bis 4, ferner umfassend:
einen ersten Schalter, der an einer Leitung angeordnet ist, an der die Gleichstromversorgung das erste Relais über die Kommunikationsleitung (30) mit Strom versorgt; und
einen zweiten Schalter, der an einer Leitung angeordnet ist, an der die Gleichstromversorgung die Steuerung (50) über die Kommunikationsleitung (30) mit Strom versorgt.

6. Schaltung nach Anspruch 5, die ferner umfasst:
eine Spannungsumwandlungseinheit (90), die zwischen dem ersten Schalter und der Steuerung (50) angeordnet und so ausgelegt ist, dass sie die Gleichstromversorgung in eine Versorgungsspannung der Steuerung (50) umwandelt.

7. Schaltung nach Anspruch 4 oder 5, ferner umfassend:
eine Kommunikationseinheit der Außeneinheit; und
eine Kommunikationseinheit der Inneneinheit, die über die Kommunikationsleitung an die Kommunikationseinheit der Außeneinheit angeschlossen ist,
wobei die Kommunikationsleitung ferner so ausgelegt ist, dass sie Kommunikationsdaten zwischen der Außeneinheit der Klimaanlage und einer Inneneinheit der Klimaanlage überträgt, nachdem die Außeneinheit der Klimaanlage gestartet wurde.

8. Schaltung nach Anspruch 1, ferner umfassend:
einen dritten Schalter, der zwischen der Gleichstromversorgung und der Kommunikationsleitung angeschlossen ist, wobei die Gleichstromversorgung die Steuerung über die Kommunikationsleitung mit Strom versorgt, wenn sich der dritte Schalter in einem Einschaltzustand befindet.

9. Klimaanlage, die die Schaltung nach einem der Ansprüche 1 bis 8 umfasst.

## Revendications

1. Circuit destiné à démarrer un climatiseur, comprenant :
une alimentation DC (10), qui est configuré pour fournir une alimentation DC à un contrôleur (50) étant une puce principale d'une unité extérieure de climatiseur ;
une ligne de communication (30), qui est connectée entre l'unité extérieure de climatiseur et une unité intérieure de climatiseur ;
une puce principale de l'unité intérieure de climatiseur, qui est configuré pour délivrer en sortie un signal de commande lorsque l'unité intérieure de climatiseur est mise sous tension par une ligne de connexion d'unité intérieure et extérieure, et l'alimentation DC est connectée à la ligne de communication sous l'action du signal de commande, et l'alimentation DC fournit l'alimentation DC au contrôleur (50) par l'intermédiaire de la ligne de communication (30) ;
le contrôleur (50), qui est configuré pour générer un signal de déclenchement de démarrage lorsque l'alimentation DC fournit l'alimentation DC au contrôleur par l'intermédiaire de la ligne de communication (30) ; et
un circuit commutateur (70), qui met en service, déclenché par le signal de déclenchement de démarrage, une boucle d'alimentation entre une alimentation AC et l'unité extérieure de climatiseur, afin de démarrer l'unité extérieure de climatiseur, dans lequeldans lequel l'alimentation AC est disposée sur l'unité extérieure de climatiseur.

2. Circuit selon la revendication 1, dans lequel le circuit commutateur (70) comprend :
un premier relais, un premier contact du premier relais étant connecté à l'alimentation AC, un second contact du premier relais étant connecté à l'unité extérieure de climatiseur, et une première bobine du premier relais étant connectée au contrôleur (50),
dans lequel la première bobine génère une induction électromagnétique sous le déclenchement du signal de déclenchement de démarrage, et le premier contact du premier relais et le second contact du premier relais sont attirés afin de mettre en service la boucle d'alimentation entre l'alimentation AC et l'unité extérieure de climatiseur.

3. Circuit selon la revendication 2, dans lequel le circuit commutateur (70) comprend :
une résistance de protection, connectée entre le second contact du premier relais, et l'unité extérieure de climatiseur.

4. Circuit selon la revendication 3, dans lequel le circuit commutateur (70) comprend en outre :
un second relais, un premier contact du second relais étant connecté au premier contact du premier relais, un second contact du second relais étant connecté à l'unité extérieure de climatiseur, et une seconde bobine du second relais étant connectée au contrôleur (50),
dans lequel le contrôleur (50) est configuré en outre pour générer un signal de déclenchement de collage une fois que l'unité extérieure de climatiseur à démarrer, et la seconde bobine génère une induction électromagnétique sous le déclenchement du signal de déclenchement de collage pour attirer le premier contact du second relais et le second contact du second relais.

5. Circuit selon l'une quelconque des revendications 2 à 4, comprenant en outre :
un premier commutateur, disposé sur une ligne dans lequel l'alimentation DC fournit l'alimentation au premier relais par l'intermédiaire de la ligne de communication (30) ; et
un deuxième commutateur, disposé sur une ligne dans lequel l'alimentation DC fournit l'alimentation au contrôleur (50) par l'intermédiaire de la ligne de communication (30).

6. Circuit selon la revendication 5, comprenant en outre :
une unité conversion de tension (90), disposée entre le premier commutateur et le contrôleur (50), et configuré pour convertir l'alimentation DC en une tension d'alimentation du contrôleur (50).

7. Circuit selon la revendication 4 ou 5, comprenant en outre :
une unité communication d'unité extérieure ; et
une unité communication d'unité intérieure, connectée à l'unité communication d'unité extérieure par l'intermédiaire de la ligne de communication,
dans lequel la ligne de communication est configurée en outre afin de transmettre des données de communication entre l'unité extérieure de climatiseur et une unité intérieure de climatiseur une fois que l'unité extérieure de climatiseur a démarré.

8. Circuit selon la revendication 1, comprenant en outre :
un troisième commutateur, connecté entre l'alimentation DC et la ligne de communication, l'alimentation DC fournissant l'alimentation au contrôleur par l'intermédiaire de la ligne de communication, lorsque le troisième commutateur se trouve dans un état de mise en service.

9. Climatiseur, comprenant le circuit selon l'une quelconque des revendications 1 à 8.
